# FASCICULE DE BREVET EUROPEEN

(11) **EP 1 316 798 B1**
(45) Date de publication et mention de la délivrance du brevet: **13.10.2004**
(21) Numéro de dépôt: 01403036.5
(22) Date de dépôt: 27.11.2001
(51) Int. Cl.: G01N 30/48

(54) **Colonnes pré-remplies pour Flashchromatographie et pour Solid Phase Extraction avec pouvoir séparateur supérieur**
Vorgefüllte Säulen für Flash - Chromatografie und Festphasenextraktion mit verbesserter Trennleistung
Prefilled columns for flash chromatography and for solid phase extraction with improved separation efficiency

(43) Date de publication de la demande: 04.06.2003
(73) Titulaire: Aznar, Pascal, 78110 Le Vesinet (FR)
(72) Inventeur: Aznar, Pascal, 78110 Le Vesinet (FR)

(56) Documents cités:
- WO-A-92/04976
- FUJI SILYSIA CHEMICAL LTD: "Silica Gel for flash chromatography" TECHNICAL BULLETIN, [en ligne] 6 septembre 2000 (2000-09-06), pages 1-3, XP002198180 Extrait de l'Internet: <URL:http://www.fuji-silysia.co.jp/e-fl60. htm> [extrait le 2002-05-06]
- CHENG C ET AL: "Analysis of the enzymatic racemization of d-aspartic acid to l-aspartic acid by the on-line coupling of a solid-phase extraction column and a ligand-exchange high-performance liquid chromatography column" JOURNAL OF CHROMATOGRAPHY, ELSEVIER SCIENCE PUBLISHERS B.V. AMSTERDAM, NL, vol. 896, no. 1-2, 27 octobre 2000 (2000-10-27), pages 299-310, XP004218793 ISSN: 0021-9673
- STILL W C ET AL: "RAPID CHROMATOGRAPHIC TECHNIQUE FOR PREPARATIVE SEPARATIONS WITH MODERATE RESOLUTION" JOURNAL OF ORGANIC CHEMISTRY, AMERICAN CHEMICAL SOCIETY. EASTON, US, vol. 43, no. 14, 1978, pages 2923-2925, XP000882390 ISSN: 0022-3263

## Description

### II.1 Domaine technique de l'invention

La présente invention concerne des colonnes pré-remplies pour Flashchromatographie et pour SPE.

Les dites colonnes remplies en gel de silice sphérique poreuse ou semi-sphérique poreuse permettent d'augmenter très sensiblement la qualité de purification (dans le cadre de la Flashchromatographie) de produits issus de la synthèse chimique.

La technique de la Flashchromatographie s'applique tout particulièrement dans la purification rapide sous faible ou moyenne pression de produits chimiques synthétisés en recherches pharmaceutique, cosmétique, agrochimique ou biotechnologique.

### II.2 Etat de l'art sur la Flashchromatographie

La chromatographie a été découverte il y a déjà plus de 100 ans par un chimiste Russe nommé TSWETT.

Ce chimiste découvrit les propriétés séparatrices de l'Alumine placée dans une colonne en verre sur laquelle il déposa de la chlorophylle. Il observa alors la migration descendante d'anneaux de couleurs le long de celle-ci.

Depuis cette découverte, de nombreuses applications analytiques, préparatives ou industrielles ont été développées.

Parmi lesquelles les plus importantes on peut citer la chromatographie en phase gazeuse et la chromatographie en phase liquide haute performance (ou encore en anglais, l'HPLC).

La Flashchromatographie est née du besoin de purifier rapidement et simplement des produits de synthèse chimique dans le cadre de besoin de laboratoire et pour des quantités comprises entre 10 mg et 100 g.

La Flashchromatographie se distingue de l'HPLC préparative essentiellement par la granulométrie du gel de silice (plus important pour la Flashchromatographie) et par une mise en oeuvre plus simple et plus rapide de la Flashchromatographie.

Depuis plusieurs années est apparu sur le marché des colonnes de Flashchromatographie pré-remplies avec du gel de silice irrégulière poreuse de granulométrie 40-60 µ ou 20-40 µ.

Ces nouvelles colonnes Flashchromatographie ont apporté une convivialité accrue (mise en oeuvre immédiate), cependant, aucun avantage dans la qualité de la séparation n'a été apporté.

Dans la nouvelle invention que nous décrivons, nous avons augmenté de manière très significative, les propriétés séparatives des colonnes Flashchromatographie tout en maintenant la même convivialité de la Technique ainsi qu' une faible contre-pression de travail.

### III. DESCRIPTION DE LA FABRICATION DE COLONNES PRE-REMPLIES POUR FLASHCHROMATOGRAPHIE ET POUR SPE

La fabrication d'une colonne pré-remplie pour Flashchromatographie et pour SPE s'obtient en remplissant un tube ou un corps de seringue ou tout autre corps permettant de remplir la fonction, sur lequel on fixe un fritté en bas afin que le gel de silice ne s'en aille.

On verse une quantité de gel de silice sphérique poreuse ou semi-sphérique poreuse.

Un deuxième fritté est alors placé en force en haut du lit obtenu.

Afin d'obtenir une bonne homogénéité dans le remplissage et d'éliminer les chemins préférentiels néfastes à la technique, on fait vibrer la colonne tout en poussant le fritté supérieur grâce à un objet approprié afin d'obtenir une compression régulière sur toute la surface du fritté.

On peut également obtenir un remplissage régulier à l'aide de liquides ou encore par voie gazeuse.

Après résorption du volume mort, nous obtenons la colonne Flashchromatographie prête à l'emploi.

On peut améliorer la qualité de tassement en faisant passer un solvant dans la colonne jusqu'à ce que le lit supérieur de la colonne se stabilise.

### Exemple 1 - Fabrication d'une colonne pour Flashchromatographie et pour SPE - 50 g de gel de silice sphérique poreuse de 25-40 µ de granulométrie

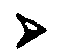 Longueur de la colonne : 85 mm
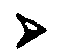 Gel de silice . 50 g de gel de silice sphérique poreuse de 70 A°
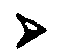 Contenant : corps de seringue de 150 ml de volume à vide et ∅ 37 mm

Prendre un corps de seringue de 150 ml et mettre un fritté poreux au fond de celui-ci.

Introduire 50 g de gel de silice sphérique poreuse dans la colonne.

Ajouter un deuxième fritté poreux sur le dessus du lit de silice.

Comprimer le fritté supérieur en vibrant l'ensemble avec un vibreur ou une table vibrante.

Attendre que le lit se stabilise et ne descende plus.

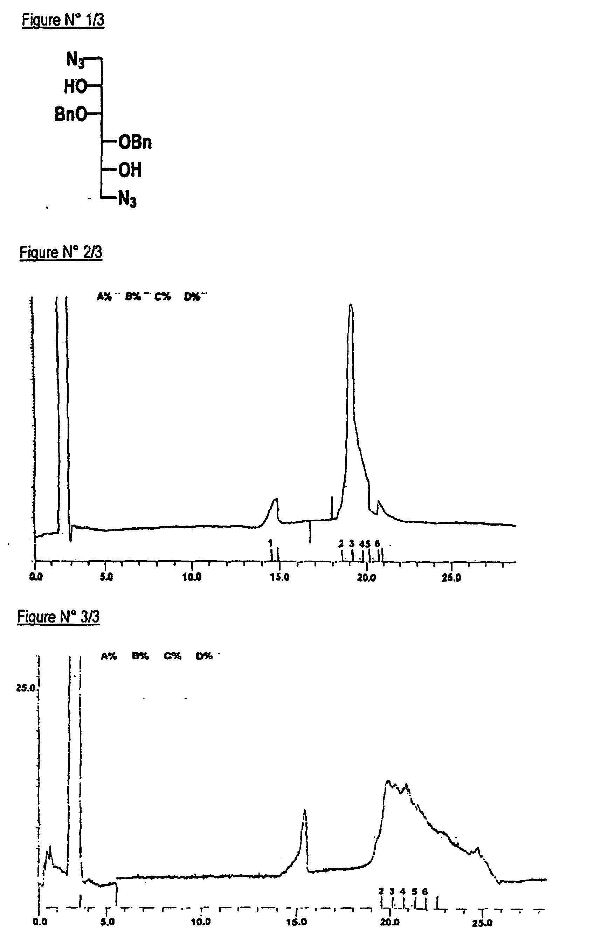

La figure N° 1/3 montre le produit principal injecté
a) Résultats obtenus
Condition opératoire :
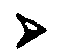 Eluant : Acétate d'ethyle/Hexane
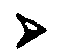 Débit: 35 ml/min
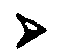 Détection : UV 254 nm
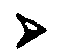 Gradient : A : Hexane / B : Acétate d'ethyle

| **Temps** | **%A** | **%B** |
|---|---|---|
| 0 | 100 | 0 |
| 5 | 100 | 0 |
| 5.1 | 90 | 10 |
| 10 | 90 | 10 |
| 10.1 | 80 | 20 |
| 15.0 | 80 | 20 |
| 15.1 | 70 | 30 |
| 25 | 70 | 30 |

La figure N°2/3 montre le chromatogramme obtenu.
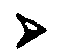 Nombre de plateaux sur le pic principal : 684
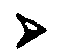 K' : 10
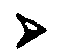 Pression de travail : 16 psi
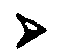 Assymétrie du pic principal: 1,75

b) La figure N° 3/3 montre le Chromatogramme de comparaison d'une même colonne et dans les mêmes conditions mais remplie en gel de silice irrégulière de technologie antérieure à l'invention en 15-35 µm de granulométrie
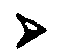 Nombre de plateaux sur le pic principal :156
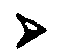 K' : 10,5
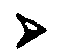 Pression de travail : 43 psi
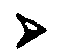 Assymétrie du pic principal : 5,88

c) Tableau comparatif

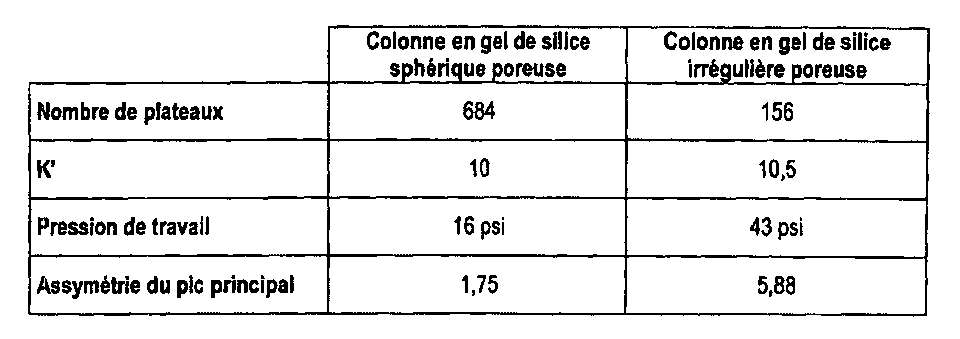

## Revendications

1. Colonne pré-remplie pour Flashchromatographie et pour SPE contenant un gel de silice sphérique poreuse **caractérisé en ce que** la granulométrie peux varier de 3 µm à 45 µm et de la porosité peux varier de 30 A° à 300 A°.

2. Colonne 1 pré-remplies pour Flashchromatographie et pour SPE contenant un gel de silice semi-sphérique poreuse **caractérisé en ce que** la granulométrie peux varier de 3 µm à 45 µm et la porosité peux varier de 30 A° à 300 A°.

3. Colonne pré-remplie pour Flashchromatographie et pour SPE selon les revendications 1ou 2 contenant de 10 mg à 1 Kg de gel de silice sphérique poreuse ou semi-sphérique poreuse.

4. Colonne pré-remplie pour Flashchromatographie et pour SPE selon les revendications 1, 2 ou 3 fabriquées dans des tubes de formes et de manières variées ainsi que dans des corps de seringues ou de formes semblables.

## Patentansprüche

1. Vorgefüllte Säule für Flash-Chromatographie und SPE, die löcherig kugelförmiges Kieselgel enthält, **dadurch gekennzeichnet, daß** ihr Komgrößenabstimmung zwischen 3 und 45 µm variieren kann, und ihre Porosität zwischen 30 und 300 Å variieren kann.

2. Vorgefüllte Säule für Flash-Chromatographie und SPE, die löcherig halbkugelförmiges Kieselgel enthält, **dadurch gekennzeichnet, daß** ihre Komgrößenabstimmung zwischen 3 und 45 µm variieren kann, und ihre Porosität zwischen 30 und 300 Å variieren kann.

3. Vorgefüllte Säule für Flash-Chromatographie und SPE nach Anspruch 1 oder 2, die zwischen 10 mg und 1 kg löcherig kugelförmiges Kieselgel oder löcherig halbkugelförmiges Kieselgel enthält.

4. Vorgefüllte Säule für Flash-Chromatographie und SPE nach Anspruch 1, 2 oder 3, die in Röhren mit vielfältigen Formen und auf vielfältige Weisen sowie in Spritzen oder ähnlichen Formen hergestellt wurde.

## Claims

1. Columns prepacked for flash chromatography and SPE packed with spherical and porous silica gel particles of size between 3-45µm and pore size between 30-300Å.

2. Columns prepacked for flash chromatography and SPE packed with spheroidal and porous silica gel particles of size between 3-45µm and pore size between 30-300Å.

3. Columns prepacked for flash chromatography and SPE according to claims 1 or 2 containing between 10mg to 1 kg of silica gel particles of the properties described.

4. Columns prepacked for flash chromatography and SPE according to claims 1, 2 or 3 manufactured with tubes syringes of different dimensions and forms.
